# EUROPEAN PATENT APPLICATION

(11) **EP 2 259 043 A1**
(43) Date of publication of application: **08.12.2010**
(21) Application number: 09714780.5
(22) Date of filing: 26.02.2009
(51) Int. Cl.: G01N 13/10

(54) **CARBON NANOTUBE SUPPORT AND PROCESS FOR PRODUCING THE CARBON NANOTUBE SUPPORT**

(30) Priority: 27.02.2008 JP 2008045920
(71) Applicant: Japan Science and Technology Agency, Kawaguchi-shi Saitama 332-0012 (JP)
(72) Inventor: NAKAYAMA, Yoshikazu, Hirakata-shi Osaka 573-0084 (JP); HIRAHARA, Kaori, Takarazuka-shi Hyogo 665-0076 (JP); SENGA, Ryosuke, Toyonaka-shi Osaka 560-0045 (JP)
(74) Representative: Schickedanz, Willi
(86) International application number: PCT/JP2009/053496
(87) International publication number: WO 2009/107696

(57) **Abstract**

Disclosed is a CNT nanodevice using small-diameter CNT having a monolayer, two-layer or other structure produced by virtue of strong CNT fastening treatment under high vacuum of an environment having a very low residual hydrocarbon content. Also disclosed are a CNT supporting body such as a CNT holding body necessary for the production process of the CNT nanodevice, and a process for producing the CNT supporting body. A supporting portion (18a) is provided on a supporting body (18). A base end portion (15a) in CNT (15) is transferred to the supporting portion (18a), and electron beams (17) or ion beams are applied toward the base end portion (15a) in CNT (15). A carbon material layer (19) covering the base end portion (15a) and the supporting portion (18a) is converted to an amorphous carbon layer and a graphite layer by the application of the beams. CNT (15) is fixed to the supporting body (18) by the graphite layer to produce the CNT supporting body. The application of the beams is carried out under high vacuum within TEM.

## Description

### FIELD OF THE INVENTION

The present invention concerns nanodevices using a carbon nanotube (subsequently described as "CNT") as a material, CNT supporting bodies such as CNT holding bodies that are necessary for the production processes of said nanodevices, and their production methods.

### BACKGROUND ART

Recently, carbon nanotube (CNT) has been attracting attention as a new material for causing a rapid progress in nanotechnology. As examples of nanodevices in which a CNT is used as a material, there are quantum effect transistors using a CNT as a circuit element, and CNT probes for atomic force microscopes, among others.

In the following, a CNT probe is explained as an example of CNT nanodevices. Scanning probe microscopes (SPM) that can detect physical property information of a specimen surface at atomic level, such as scanning tunneling microscopes (STM) and atomic force microscopes (AFM), are being developed. To obtain physical property information of a specimen surface by means of an SPM, a probe is necessary that detects the information by contacting the specimen surface directly. In addition, AFM, which is one type of SPM, can measure the surface unevenness of a DVD disk in high resolution by means of a CNT probe, and it is a measuring device that is indispensable for surface physical property measurement of DVD disks. Also, an SPM equipped with a CNT probe can be used for measurement of not only the surface configuration of a specimen, but also of the electric and magnetic physical properties among others. For example, a magnetic force microscope (MFM), which is one type of SPM, is used for measuring the magnetic domain structure of a specimen from the magnetic force between a ferromagnetism probe and the specimen.

Conventionally, a probe comprised a silicon cantilever in which a protruded portion is formed on a cantilever portion, and a sharpening processing was done on the tip end of this protruded portion. The sharp tip end of this protruded portion becomes the probe point, and physical / chemical interaction with the specimen surface is detected by contacting this tip end to the specimen surface. Information on the physical properties, such as atomic structure information, magnetic information, functional group information, and electronic information among others, is thus obtained.

It is only natural that the resolution of the physical property information becomes higher as the probe point becomes sharper. However, even if a sharpening processing is done on the tip end of a protruded portion by semiconductor technology, decreasing the diameter of a tip end to less than few tens of nm is difficult by the current engineering level. Under this background, carbon nanotube was discovered. H.Dai and others, in NATURE (Vol.384, pp.147-150 (14 November 1996)) (Non-Patent Document 1), proposed a carbon nanotube probe in which a carbon nanotube is bonded to said protruded portion.

Diameter D of a carbon nanotube is about 1 to several tens of nm, and axis length L is several micrometers. Its aspect ratio (L/D) reaches from several hundreds to several thousands, and it has an optimum property as a probe for SPM. It has been put to practical use as a CNT probe in which a CNT is adhered to a protruded portion of the cantilever.

The present inventors already have invented and disclosed two methods for fastening a CNT more strongly to said protruded portion of a cantilever, an indispensable step for production of a CNT probe. The first is a method where a carbon nanotube is coated and fastened onto a protruded portion surface by a coating film, and it has been published as Japanese Patent Laid-Open Bulletin No. JP2000-227435 (Patent Document 1). The second is a method where the base end portion of a carbon nanotube is fused to a protruded portion surface by electron beam irradiation or electric current application, and it has been published as Japanese Patent Laid-Open Bulletin No. JP2000-249712 (Patent Document 2).
[Patent Document 1] Japanese Patent Laid-Open Bulletin No. JP2000-227435
[Patent Document 2] Japanese Patent Laid-Open Bulletin No. JP2000-249712
[Non-Patent Document 1] H. Dai et al., NATURE, Vo1.384, pp.147-150 (14 November 1996)

### DISCLOSURE OF THE INVENTION

### PROBLEMS TO BE SOLVED BY THE INVENTION

In manufacture of a nanodevice, when a function under dynamic load is assumed, as it is for a CNT probe, a highly accurate and strong member fastening technique to a selective nanosize spot area is indispensable. A property of the smallest possible tip end curvature and the least possible damage by abrasion is desired for a probe material for a scanning probe microscope. Because CNT has a diameter of nanometer size and a superior mechanical strength, it can give a much more superior capability than a conventional silicon cantilever.

Now, when a CNT is attached, it is necessary for it to be fastened firmly so that it does not detach from the probe during the probe use by a stress application at the time of scanning or exposure to the atmosphere. The fastening treatment of a CNT, as indicated in Patent Document 2 for example, is done inside a scanning electron microscope (SEM) by beam-irradiating an electron beam onto the fastening portion area were the CNT has been placed, decomposing the residual hydrocarbon in the environment, depositing amorphous carbon (a-C) in a vicinity of the CNT root, and thus fastening the CNT.

However, when amorphous carbon is used for fastening a CNT, the low electroconductivity of amorphous carbon becomes a serious flaw. Among nanodevices using a CNT, there are many that require a high electroconductivity. As for examples, there are a scanning tunneling microscope (STM), which is one type of said SPM, and an electronic circuit in which a CNT is used as a nanoelectronic part such as a nanotransistor. However, because amorphous carbon has no crystallinity, and moreover, because atoms whose electronic structure is sp³ are present in a large quantity among the carbon atoms forming the amorphous carbon, a large number of electrons are localized, and do not contribute to an electric current. Therefore, amorphous carbon has a low electroconductivity, and it is unsuitable for said uses that require a high electroconductivity. To increase the performance of said nanodevice, it is necessary to make the binding site with the CNT highly electroconductive.

Also, as for a CNT that is amenable to the fastening treatment by the above fastening method, a multilayered CNT with diameter of several nanometers is the limit because of the resolution of SEM. That is to say, using the above fastening method, a probe using a small-diameter CNT, such as one with a monolayer or two layers, cannot be produced. Also, a transmission electron microscope (TEM) is capable of a high resolution observation in comparison with a normal SEM, but because an observation is done under a high vacuum (approximately 10⁻⁵ Pa), amorphous carbon does not deposit in a vicinity of the CNT root even when an electron beam is irradiated, and a CNT cannot be fastened.

Therefore, the object of the present invention is to offer a CNT nanodevice that uses a small-diameter CNT such as one of monolayer or two layers, and a CNT supporting body such as a CNT holding body that is necessary for a production process of such device, together with their production method, by solving the above problems, and making a strong CNT fastening treatment possible under a high vacuum state with an extremely few residual hydrocarbon in the environment.

### MEANS TO SOLVE THE PROBLEMS

The first form of the present invention is, in a CNT supporting body in which a CNT is fastened to a supporting portion of said CNT supporting body, said CNT supporting body, characterized in that a bottom graphite layer is formed on a surface of said supporting portion, a fastening portion of said CNT is arranged to contact a surface of said bottom graphite layer, and furthermore, said CNT is fastened to said supporting portion by a top graphite layer coating said fastening portion.

The second form of the present invention is, in a CNT supporting body in which a CNT is fastened to a supporting portion of said CNT supporting body, said CNT supporting body, characterized in that a fastening portion of said CNT is arranged on a surface of said supporting portion, a top graphite layer is formed on said surface of said supporting portion of and near said fastening portion, and said CNT is fastened to said supporting portion by said top graphite layer coating said fastening portion.

The third form of the present invention is the CNT supporting body of the first or second form, wherein at least an amorphous carbon layer is formed at an outside surface of said top graphite layer.

The fourth form of the present invention is the CNT supporting body of any one of the first to third forms, wherein said supporting body is a cantilever, said supporting portion is a protruded portion formed to be protruded from said cantilever, said fastening portion is a base end portion of said CNT, and said CNT supporting body is a CNT probe in which said base end portion of said CNT is fastened to said protruded portion, and a tip end portion of said CNT is protruded from said protruded portion.

The fifth form of the present invention is the CNT supporting body of any one of the first to third forms, wherein said supporting body is a circuit board, said CNT is a circuit element, said supporting portion is a joining portion where said CNT is joined, said fastening portion is an end portion of said CNT, and said CNT supporting body is a CNT circuit board in which said end portion of said CNT is fastened to said joining portion.

The sixth form of the present invention is the CNT supporting body of any one of the first to third forms, wherein said supporting body is a knife edge, said supporting portion is an edge portion from which said CNT is protruded, said fastening portion is an end portion of said CNT, and said CNT supporting body is a CNT cartridge in which said end portion of said CNT is fastened to said edge portion.

The seventh form of the present invention is the CNT supporting body of any one of the first to sixth forms, wherein a site in which said CNT is fastened to said supporting portion by said top graphite layer and/or said bottom graphite layer is one place or more.

The eighth form of the present invention is, in a production method of a CNT supporting body in which a CNT is fastened to a supporting portion of said supporting body, said production method of a CNT supporting body, characterized in that a carbon material layer is formed on a surface of said supporting portion, a carbon material comprising a carbon molecule or an organic matter being deposited in said carbon material layer, a fastening portion of said CNT is brought into contact with a surface of said carbon material layer for positioning said fastening portion on said surface, an electron beam or an ion beam is irradiated on said fastening portion and/or a region subject to irradiation at a vicinity of said fastening portion to decompose said carbon material layer, and said fastening portion is coated by a carbon film formed by said decomposition so that said CNT is fastened to said supporting portion.

The ninth form of the present invention is, in a production method of a CNT supporting body in which a CNT is fastened to a supporting portion of said supporting body, said production method of a CNT supporting body, characterized in that a fastening portion of said CNT is positioned on a surface of said supporting portion, a carbon material layer is formed by depositing a carbon material comprising a carbon molecule or an organic matter on said surface of said supporting portion on or near said fastening portion, said carbon material layer is decomposed by irradiating an electron beam or an ion beam on said fastening portion and/or a region subject to irradiation at a vicinity of said fastening portion, and said CNT is fastened to said supporting portion by coating said fastening portion with a carbon film formed by said decomposition.

The tenth form of the present invention is the production method of a CNT supporting body of the eighth or ninth form, wherein said carbon material layer is formed by positioning said carbon material of a predetermined mass in a container, putting said supporting body in said container then sealing said container, vaporizing said carbon material by heating said container, and depositing said carbon material on a surface of said supporting body including said supporting portion.

The eleventh form of the present invention is the production method of a CNT supporting body of the tenth form, wherein a carbon material solution of a predetermined concentration is prepared in which said carbon material is mixed in a solvent, a predetermined volume of said carbon material solution is poured into said container, said solvent is removed from said container by an application of heat, and said carbon material of a predetermined mass is caused to remain and be arranged in said container.

The twelfth form of the present invention is the production method of a CNT supporting body of the tenth or eleventh form, wherein said carbon material adhered on said surface of said CNT supporting body is removed by washing said CNT supporting body with a washing solvent or heating said supporting body, after said fastening portion of said CNT has been fastened to said supporting portion by coating with said carbon film.

The thirteenth form of the present invention is the production method of a CNT supporting body in any one of the eighth to eleventh forms, wherein said carbon film is an amorphous carbon film or a graphite film.

The fourteenth form of the present invention is the production method of a CNT supporting body of any one of the eighth to thirteenth forms, wherein said carbon molecule is a fullerene or a metal-including fullerene.

The fifteenth form of the present invention is the production method of a CNT supporting body of any one of the eight to thirteenth forms, wherein said organic matter includes a component aside from carbon, and said carbon film is formed by said decomposition during which said component aside from carbon is vaporized and dispersed.

The sixteenth form of the present invention is the production method of a CNT supporting body of any one of the eighth to fifteenth forms, wherein said supporting body is cantilever, said supporting portion is a protruded portion formed to be protruded from said cantilever, said fastening portion is a base end portion of said CNT, and said CNT supporting body is a CNT probe in which said base end portion of said CNT is fastened to said protruded portion so that a tip end portion of said CNT projects from said protruded portion.

The seventeenth form of the present invention is the production method of a CNT supporting body of any one of the eighth to fifteenth forms, wherein said supporting body is a circuit board, said CNT is a circuit element, said supporting portion is a joining portion to which said CNT is joined, said fastening portion is an end portion of said CNT, and said CNT supporting body is a CNT circuit board in which said end portion of said CNT is fastened to said joining portion.

The eighteenth form of the present invention is the production method of a CNT supporting body of any one of the eighth to fifteenth forms, wherein said supporting body is a knife edge, said supporting portion is an edge portion from which said CNT protrudes, said fastening portion is an end portion of said CNT, and said CNT supporting body is a CNT cartridge in which said end portion of said CNT is fastened to said edge portion.

### EFFECTS OF THE INVENTION

According to the first form of the present invention, a bottom graphite layer is formed on a surface of a supporting portion, and furthermore, a CNT is fastened by a top graphite layer that coats a fastening portion of said CNT. Therefore, said CNT and said supporting portion become electrically conductive through the graphite layers having a high electroconductivity. By this, parts that are high efficient can be provided for uses that require an electron conduction, and these parts can be used for producing highly sensitive and highly efficient electronic and electric apparatuses.

Because graphite is formed only from carbon atoms having the sp² electronic structure, free electrons are present in high density. Also, its crystallinity is high in comparison with amorphous carbon, and therefore, the mobility of said free electrons is high. Furthermore, because the structure of graphite resembles that of CNT, when graphite bonds with a CNT, a strong contact may be attained through the affinity between the graphite and the CNT. Therefore, an obstruction of the electron movement at the interface of said bond can be lessened. For these reasons, the electroconductivity is high within a graphite layer and at the interface between a CNT and the graphite layer. When said CNT is used as a conduction material of electrons that comprise electricity, this high electroconductivity is useful in lowering the loss of said electricity upon guiding the conducted electrons that comprise said electricity to said supporting portion.

For example, when said CNT is used as a probe of a scanning tunneling microscope (STM), for a tunneling current that conducts through said probe to be detected, it is necessary that said tunnel current is guided to the supporting portion of said probe. If the electroconductivity at the joining portion between said probe and said supporting portion is low, the loss of said tunnel current becomes high, and therefore, the sensitivity of said STM decreases. By making said joining portion a graphite layer, the loss of said tunnel current can be lowered, and therefore, a highly sensitive STM can be provided.

Also, when a CNT is used as a circuit element in an electric circuit, for said electric circuit to be operational, it is necessary that the electric current conducting through said CNT be guided to the supporting portion supporting said CNT. When the electric resistance of the binding portion between said CNT and said supporting portion is high, the electric current guided to said supporting portion decreases, and therefore, the performance of said electric circuit decreases. By making said joining portion a graphite layer, a drop in the electric current at said joining portion can be prevented, and therefore, a highly efficient electric circuit can be provided.

According to the second form of the present invention, the top graphite layer is coated over the surface of a fastening portion of a CNT and the surface of a supporting portion at its vicinity, and said CNT is fastened to said supporting portion by said graphite layer. Because of this, by means of a simplified structure, one can obtain a CNT supporting body in which the electroconductivity of said CNT and the binding site of said support member is high.

In the first form, a bottom graphite layer and a top graphite layer are present, and the electrical conduction and the adhesion between said CNT and said supporting member depend upon both graphite layers. However, when the top graphite layer is in contact directly with the supporting portion and also with the CNT, said electrical conduction and said adhesion can be attained from only said top graphite layer, and therefore, a bottom graphite layer is not necessary. Therefore, in this form, said top graphite layer comes into contact directly with said CNT and said support member, and the structure of said CNT supporting body is simplified.

In this form, it is not necessary for said CNT and said supporting member to be in a direct contact. For example, amorphous carbon may exist between said CNT and said supporting portion. Under this condition, because said amorphous carbon has a low electroconductivity, the electrical conduction between said CNT and said supporting portion becomes dependent upon said top graphite layer. Therefore, high electroconductivity of said top graphite layer becomes even more important.

According to the third form of the present invention, because an amorphous carbon layer is formed at least on an outside surface of a top graphite layer, said graphite layer is reinforced by said amorphous carbon layer. Therefore, a joining portion between a CNT and a supporting portion that is mechanically strong and highly electroconductive can be obtained.

The amorphous carbon layer here is formed on the top graphite layer, at the surface at the opposite side (outside surface) of the surface that is in contact with the supporting portion (inside surface). However, said amorphous carbon layer may be formed continuously beyond the periphery of said graphite layer. Also, said amorphous carbon layer may come into a direct contact with said supporting portion and said fastening portion. In this case, said amorphous carbon layer provides reinforcement to the bond with said supporting portion and said fastening portion of said graphite layer.

According to the fourth form of the present invention, the supporting portion is a protruded portion formed to be protruded from the cantilever, the fastening portion is a base end portion of a CNT, and the tip end portion of said CNT is a CNT probe. Because of this, graphite that is a high electroconductivity material is present as a joining portion between said CNT and said supporting portion, and therefore, a scanning probe microscope (SPM) having a high sensitivity can be obtained.

Among said SPMs, as for those that examine physical properties from electrical characteristics, there exist a scanning tunneling microscope (STM), a Kelvin probe force microscope (KFM), and an electrostatic force microscope (EFM), among others.

Just as described in the explanation of the first form, to obtain a high sensitivity in these SPMs, it is necessary that the probe, the cantilever, and their joining portion are highly electroconductive. Therefore, the graphite layer in the present invention can be used to obtain high electroconductivity of said joining portion, and furthermore, to join strongly the CNT that is said probe and the supporting portion that is the protruded portion of the cantilever.

According to the fifth form of the present invention, because said supporting body is a circuit board, said CNT is a circuit element, and said supporting portion is a joining position where said CNT is joined, a high-performance electronic circuit can be obtained even if the utilized electric current is minute.

CNT can be used as electronic parts such as a transistor, a diode, a capacitor, and an inductor among others. Because these electronic parts are minute, it is anticipated that a high performance can be achieved by using a lower electric current than electronic parts in which a silicon p-n junction is used.

However, if an electric current loss occurs at the joining portion between these CNT circuit elements and the board, the high performance of these CNT circuit elements cannot be achieved. By using a graphite layer of the present invention as said joining portion, a highly efficient CNT circuit whose electric current consumption is minute can be obtained.

According to the sixth form of the present invention, because said supporting body is a knife edge, said supporting portion is an edge portion from which a CNT protrudes, and said CNT supporting body is a CNT cartridge, said CNT is fastened stably on said CNT cartridge, and therefore, a movement of said CNT to the protruded portion of cantilever is facilitated.

In a CNT cartridge, the CNT is usually set up in a non-adhered state on the edge portion. However, under this condition, a possibility exists where said CNT falls off during the knife edge movement. By fastening said CNT to said edge portion, the movement of said CNT to another supporting portion can be made easy and sure. After the movement, both supporting portions are separated by cutting said CNT with an electron or ion beam.

According to the seventh form of the present invention, because the site where the CNT is fastened to the supporting portion is one place or more, the flexibility in production can be improved.

To obtain a CNT supporting body on which a high electroconductivity is present between the CNT and the supporting portion, and the CNT is fastened strongly to the supporting portion, it is not necessary that the graphite layer is formed on the entire surface of said supporting portion, and also, it is not necessary for the graphite layer to be formed on the entire area where the CNT exists on the surface directly above said supporting portion. That is to say, to obtain a CNT supporting portion of the present invention, it may be formed only partially on said surface and said area.

Also, it is not necessary for said graphite layer to be formed continuously. Even if said graphite layer is formed in an island shape in said area, a strong joining portion with a high electroconductivity can be obtained. Such island-like graphite layer can be obtained in, for example, the eighth form, by irradiating an electron or ion beam at two sites or more.

The graphite layer in this form can be more easily produced than the graphite layer formed on the entirety of said surface or said area, and moreover, a strong fastening with a high electroconductivity can be obtained.

According to the eighth form of the present invention, a carbon material layer is formed on a surface of said supporting portion, a carbon material comprising a carbon molecule or an organic matter being deposited in said carbon material layer, a fastening portion of said CNT is brought into contact with a surface of said carbon material layer for positioning said fastening portion on said surface, an electron beam or an ion beam is irradiated on said fastening portion and/or a region subject to irradiation at a vicinity of said fastening portion to decompose said carbon material layer, and said fastening portion is coated by a carbon film formed by said decomposition so that said CNT is fastened to said supporting portion. Because of this, the carbon structure can be rebuilt, and said fastening portion can be coated by the decomposition of said carbon material layer comprising carbon, which also comprises said CNT, and said CNT can be fastened strongly to said supporting portion. Therefore, a strong CNT fastening treatment becomes possible by doing the decomposition of said carbon material layer under an extremely high vacuum with very little residual hydrocarbon in the environment, while doing a high resolution observation inside a transmission electron microscope (TEM) in which observation is done under high vacuum (to 10⁻⁵ Pa). Moreover, through the CNT fastening treatment under a high resolution observation, production of a CNT supporting body that could not be realized by a conventional fixed method, such as a CNT nanodevice using a small-diameter CNT such as a monolayer or two layers, becomes possible. By the way, as for an electron microscope for use in a fastening treatment, one that has a high-resolution performance just like said TEM is preferable. A high-resolution SEM, which can make an observation under high vacuum in a similar manner as a TEM, can also be used.

A CNT supporting body to which the present invention can be applied is a CNT measuring probe comprising a CNT probe in which the base end portion of the CNT is fastened to the protruded portion of the cantilever, and a CNT nanodevice such as a quantum effect transistor in which a CNT is fastened and mounted on a circuit board as a circuit element. Also, the present invention can be applied to a CNT holding body for supporting a single or multiple CNTs and transporting them at a given position during a device production process.

The present inventors, as a result of examining various kinds of carbon substance materials, obtained a knowledge that fullerene (Cₙ: n≥60) is favorable as said carbon molecule. For example, in the case of fullerene C₆₀, an electron beam-induced reaction is caused by an irradiation of, for example, an electron beam, the spherical shell-like structure of the C₆₀ molecules disintegrates and transforms into a layered amorphous structure, a carbon structure reconstruction is caused at the center of the electron beam irradiation area, the carbon atoms in the irradiation area bond covalently, and fastening of a CNT becomes possible. Furthermore, it became clear that a transformation into a graphite (black lead) structure occurs when an electron beam irradiation is done. From this knowledge, fullerene makes it possible to give an electrical conduction property to the deposited matter of said fastening portion, and it is suitable for a CNT supporting body. Also, the irradiation area can be formed selectively into an amorphous or a graphite structure by an adjustment of the electron beam irradiance. In particular, it can be transformed into an area to which an electrical contact is possible by the formation of the graphite layer. Therefore, a wide development in application becomes possible in nanodevices among others.

In said eighth form, the fastening portion of said CNT is positioned after forming said carbon material layer on the surface of said supporting portion, but the present invention also includes a form in which said carbon material layer is formed after placing said fastening portion. That is to say, according to the ninth form of the present invention, a fastening portion of said CNT is positioned on a surface of said supporting portion, a carbon material layer is formed by depositing a carbon material comprising a carbon molecule or an organic matter on a surface or surfaces of said fastening portion and/or of said supporting portion at a vicinity of said fastening portion, said carbon material layer is decomposed by irradiating an electron beam or an ion beam on said fastening portion and/or a region subject to irradiation at a vicinity of said fastening portion, and said CNT is fastened to said supporting portion by coating said fastening portion with a carbon film formed by the said decomposition. Because of this, just as in the eighth said form, said CNT can be fastened strongly to said supporting portion by rebuilding the carbon structure through the decomposition of said carbon material layer, and coating said fastening portion positioned beforehand on the surface of said supporting portion.

According to the tenth form of the present invention, said carbon material layer is formed by positioning said carbon material of a predetermined mass in a container, putting said supporting body in said container then sealing said container, vaporizing said carbon material by heating said container, and depositing said carbon material on a surface of said supporting body including said supporting portion. Because of this, for example, when fullerene C₆₀ is used as said carbon material, during the sublimation of C₆₀ by heating at 400°C, it becomes possible to control the thickness of the deposited C₆₀ molecule film by varying the time (sublimation time) in which this heating temperature is maintained and the quantity of the sealed C₆₀. Therefore, according to the present embodiment, said carbon material layer for fastening a CNT can be formed, compliant to various CNT nanodevices.

According to the eleventh form of the present invention, a carbon material solution of a predetermined concentration is prepared in which said carbon material is mixed in a solvent in said carbon material solution, a predetermined volume of said carbon material solution is poured into said container, said solvent is removed from said container by an application of heat, and said carbon material of a predetermined mass is caused to remain and be arranged in said container. Because of this, the concentration of said carbon material solution can be adjusted based on the solution method, the minimum quantity of said carbon material can be deposited on the surface of said supporting body, and a cost saving in the CNT fastening treatment can be sought. Especially, because fullerenes are relatively expensive carbon materials, reduction of materials cost can be realized by implementing the present embodiment.

According to the twelfth form of the present invention, said carbon material adhered on a surface of said CNT supporting body is removed by washing said CNT supporting body with a washing solvent or heating said supporting body, after said fastening portion of said CNT has been fastened to said supporting portion by coating with said carbon film. Because of this, the carbon material unnecessary for the fastening treatment can be collected and recycled by said washing or said removal, and a reduction in the production cost of a CNT supporting body can be achieved.

According to the thirteenth form of the present invention, by using as said carbon film an amorphous carbon film with a superior CNT fastening strength or a graphite film that has an electrical conductivity as well as a fastening strength, a CNT supporting body production method suitable for a CNT probe or a CNT nanodevice can be provided.

According to the fourteenth form of the present invention, a stronger CNT fastening can be realized by using said fullerene Cₙ as said carbon molecule. Also, by using a metal inclusion fullerene Cₙ-M (M: a metallic element), a CNT fastening and an endowment of electrical conduction property by the inclusion metallic element can be done.

According to the fifteenth form of the present invention, said organic matter includes a component aside from carbon, and said carbon film is formed by said decomposition during which said component aside from carbon is vaporized and dispersed. Because of this, just as with the carbon material layer from said carbon molecule, the said carbon film which is obtained from said organic matter can coat said fastening portion, and fasten said CNT strongly to said supporting portion, by rebuilding the carbon structure through the decomposition of said carbon material layer that, just like said CNT, comprises carbon. A carbon material solution of a predetermined concentration is prepared by mixing said organic matter into a solvent. When the solvent is removed by application of heat, there is a possibility that it evaporates excessively if the boiling point is low. Because of this, one with a high boiling point is preferable, and as the liquid, for example, benzene can be used. Also, for the organic substance, a substance that can form a nanosized film on said support surface is preferable. Other than an organic EL (electroluminescence) material such as diamine or anthracene, for example, an aromatic compound such as naphthalene, phenanthrecene, pyrene, and perylene among others, organic pigment molecules such as an organic molecule semiconductor, a cyanine dye, and beta-carotene among others, and an organic thin film materials such as porphyrin, sexiphenyl, sexithienyl, polytetrafluoroethylene, pentacene, paraffin, diacetylene, and phthalocyanine among others can be used. Formation of an organic substance into a thin film can be done by publicly known formation technique and vacuum deposition technique of oriented organic molecule films.

According to the sixteenth form of the present invention, in production of a CNT probe in which the base end portion of said CNT is fastened to said protruded portion formed to be protruded from said cantilever and the tip end portion of said CNT is protruded from said protruded portion, a small-diameter CNT can be fastened more strongly by forming said carbon material layer on said protruded portion. A more minute and highly precise CNT probe capable of a highly precise local measurement, which is a probe that is suitable for an SPM such as an MFM and an AFM, can be provided.

The present invention can also be applied to production of a nanodevice such as a quantum effect transistor. According to the seventeenth form of the present invention, a nanodevice comprising a CNT circuit board can be produced, in which said carbon material layer is formed at said joining position of said supporting portion, said CNT is a circuit element with a minute configuration, and the end portion of said CNT is fastened strongly to said joining portion of said circuit board.

The present invention can also be applied to a CNT holding body (knife edge) for CNT probe production shown in said Patent Document 1 or 2. That is to say, according to the eighteenth form of the present invention, for example, in a case where a CNT tip end portion is adhered to a knife edge, a CNT base end portion is extended from the knife point of said knife edge, and said CNT base end portion is fastened to the protruded portion of the cantilever, a CNT cartridge in which the end portion of said CNT is fastened more rigidly to said edge portion of said knife edge can be produced, by forming said carbon material layer on said fastening portion of said supporting portion.

### BRIEF DESCRIPTION OF THE DRAWINGS

FIG. 1 is a schematic process drawing of a case in which bottom and top graphite layers are formed on a CNT in a substantially parallel manner.
FIG. 2 is a schematic process drawing of a case where bottom and top graphite layers are formed in a substantially vertical manner with respect to CNT.
FIG. 3 is a schematic process drawing of a case in which only a top graphite layer is formed substantially parallel with respect to CNT.
FIG. 4 is a schematic process drawing of a case in which only a top graphite layer is formed substantially vertically with respect to CNT.
FIG. 5 is a schematic structural drawing of cases in which a graphite layer is formed partially on a supporting portion surface and a CNT surface.
FIG. 6 is a forming process drawing of a carbon material layer in an embodiment of the present invention.
FIG. 7 is a TEM photograph showing an example of fullerene molecular layer formation.
FIG. 8 is a process drawing of carbon material layer formation on knife edge 11.
FIG. 9 is a schematic process drawing for explaining a CNT transfer treatment by a CNT cartridge.
FIG. 10 is TEM photographs showing an experimental example of fullerene molecular layer formation on a CNT cartridge.
FIG. 11 is TEM photographs that show other experimental examples in which the mixture concentration and the sublimation time were varied from the experiment of FIG. 5.
FIG. 12 is TEM photographs showing an example in which the thickness reduction of a fullerene molecule layer was successful.
FIG. 13 is a graph showing the variation of molecule film thickness Z (nm) with respect to enclosed quantity Y (µM) of fullerene C₆₀ molecules and sublimation time X (minute).
FIG. 14 is a schematic diagram of a supporting body on which a carbon material layer such as fullerenes is formed.
FIG. 15 is a schematic molecular structure diagram of fullerene molecules and their face centered cubic lattice (fcc) structure.
FIG. 16 is a figure showing CNT fastening steps to a protruded portion of a cantilever.
FIG. 17 is TEM photographs and photographs showing beam areas, in 2 examples of irradiation experiments in which an electron beam is converged on a fullerene molecule film.
FIG. 18 is TEM photographs and a photograph showing the beam area from another electron beam irradiation example.
FIG. 19 is TEM photographs showing a process where a fullerene molecule film is transformed into a graphite film by electron beam irradiation.
FIG. 20 is TEM photographs showing an experimental example of fastening by electron beam irradiation.
FIG. 21 is a graph showing an increase in conductivity by a graphite layer formation.
FIG. 22 is TEM photographs showing a mechanical strength evaluation of a CNT supporting body on which a graphite layer was formed.
FIG. 23 is a summary configuration diagram of a quantum effect transistor that includes a CNT circuit element fastened by means of the CNT supporting body production method concerning the present embodiment.

### DENOTATION OF REFERENCE NUMERALS

- 1: Quartz tube
- 2: Fullerene solution
- 3: Fullerene
- 4: Silicon cantilever materials
- 5: Glass wool materials
- 6: Aspiration port
- 7: Burner
- 8: Vacuum seal
- 9: Fullerene molecular layer
- 10: Deposited matter
- 11: Knife edge
- 12: Electron microscope room
- 13: Cantilever
- 14: Protruded portion
- 15: CNT
- 15a: Base end portion
- 16: Fullerene molecular layer
- 17: Electron beam
- 18: Supporting body
- 18a: Supporting portion
- 19: Carbon material layer
- 100: Silicon substrate
- 101: Oxide film
- 102: Surface
- 103: Carbon material layer
- 104: CNT
- 105: Source electrode layer
- 106: Drain electrode layer
- 107: Gate electrode layer
- 201: Bottom graphite layer
- 202: Top graphite layer
- 203: Gap layer
- 204: Reinforcement layer
- 301: Electrical voltage graph
- 302: Electric current graph
- 303: 15 second time period
- 304: 10 second time period
- 305: 10 second time period

### BEST MODE FOR CARRYING OUT THE INVENTION

In the following, the embodiments of the CNT supporting body concerning the present invention and its production method are explained in detail according to figures.

The present embodiment is a CNT probe in which the base end portion of a CNT is fastened to a protruded portion formed in a protruded manner on a cantilever, the tip end portion of said CNT projecting from said protruded portion, and an example of its manufacturing process.

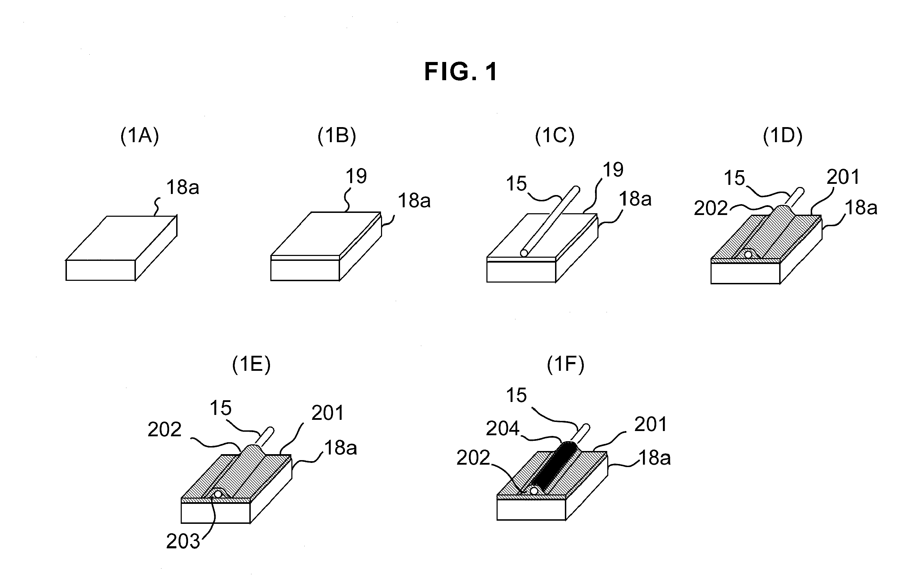

FIG. 1 is a schematic process drawing of a case in which bottom and top graphite layers are formed on a CNT in a substantially parallel manner. On supporting portion 18a (1A), carbon material layer 19 is formed (1B), and CNT 15 is arranged substantially horizontally on the upper side of carbon material layer 19 with respect to the surface of carbon material layer 19 (1C). Next, when an electron beam is irradiated or an electric current is applied, carbon material layer 19 transforms into bottom graphite layer 201, and at the same time, the carbon material accumulates on the upper side of CNT 15 and transforms into graphite, thus forming top graphite layer 202 (1D). Bottom graphite layer 201 and top graphite layer 202 do not differ crystallographically, and the only difference is the location with respect to CNT 15 and supporting portion 18a. All that is required is that bottom graphite layer 201 and top graphite layer 202 come in a mutual contact at least partially, and also that they come in contact partially with CNT 15. Therefore, gap layer 203 may exist (1E) between bottom graphite layer 201 and top graphite layer 202, between bottom graphite layer 201 and CNT 15, and/or between top graphite layer 202 and CNT 15. Gap layer 203 here may be a void, or it may be formed by a carbon material or amorphous carbon that is a component material. Also, reinforcement layer 204 formed from amorphous carbon or such may be formed furthermore on the upper side of top graphite layer 202 (1F).

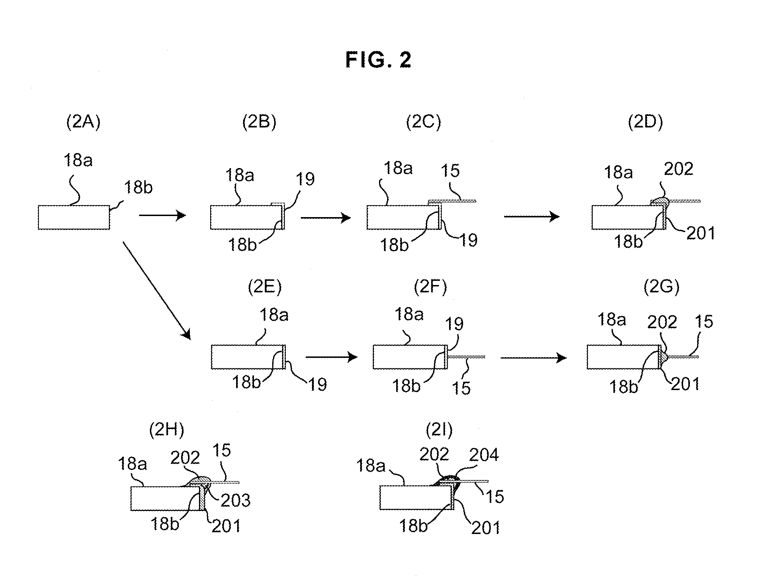

FIG. 2 is a schematic process drawing of a case where bottom and top graphite layers are formed in a substantially vertical manner with respect to CNT. Carbon material layer 19 is formed (2B) on supporting portion tip end 18b (2A), and CNT 15 is positioned on the upper side of supporting portion 18a substantially verticality with respect to the surface of carbon material layer 19 (2C). Next, when electron beam is irradiated or an electric current is applied at base end portion 15a of CNT 15, the section of carbon material layer 19 present at periphery of base end portion 15a is transformed into bottom graphite layer 201, and at the same time, carbon material accumulates on the upper side of base end portion 15a and transforms into graphite, forming top graphite layer 202 (2D). Also, instead of the step shown in (2B), even if carbon material layer 19 is formed at supporting portion tip end 18b (2E), CNT 15 is positioned on the upper side of supporting portion tip end 18b in a substantially perpendicular manner (2F) with respect to the surface of carbon material layer 19, and bottom graphite layer 201 and top graphite layer 202 are formed later (2G), said graphite layer is formed substantially perpendicularly with respect to CNT 15. Bottom graphite layer 201 and top graphite layer 202 do not differ crystallographically, and the only difference is the location with respect to CNT 15 and supporting portion 18a. All that is required is that bottom graphite layer 201 and top graphite layer 202 come in a mutual contact at least partially, and also that they come in contact partially with CNT 15. Therefore, gap layer 203 may exist (2H) between bottom graphite layer 201 and top graphite layer 202, between bottom graphite layer 201 and CNT 15, and/or between top graphite layer 202 and CNT 15. Gap layer 203 here may be a void, or it may be formed by a carbon material or amorphous carbon that is a component material. Also, reinforcement layer 204 formed from amorphous carbon or such may be formed furthermore on the upper side of top graphite layer 202 (21).

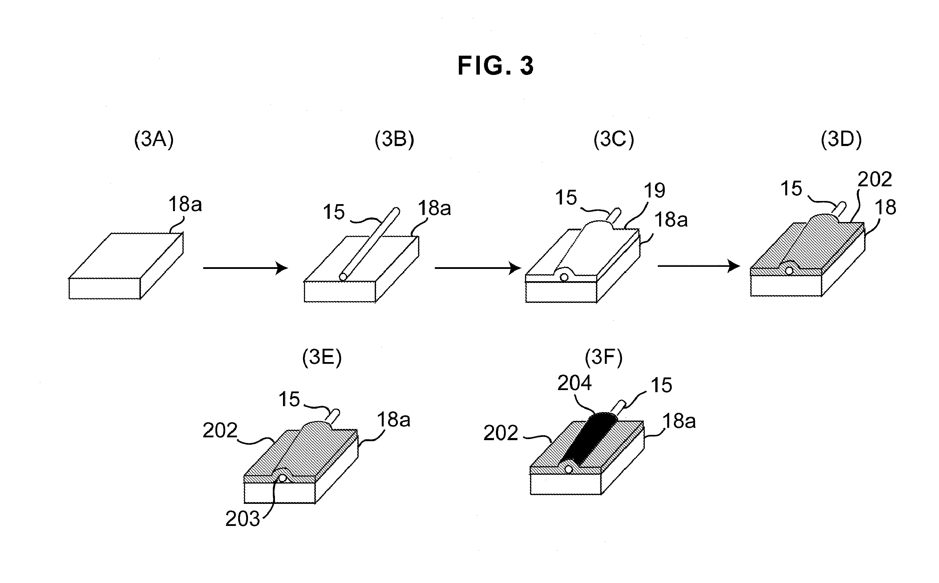

FIG. 3 is a schematic process drawing of a case in which only a top graphite layer is formed substantially parallel with respect to CNT. On supporting portion 18a (3A), CNT 15 is positioned substantially horizontally (3B) with respect to the upper surface of supporting portion 18a. Next, carbon molecule layer 19 is formed (3C) on the upper surface of supporting portion 18a and CNT 15. Afterwards, when an electron beam is irradiated or an electric current is applied, carbon material layer 19 is transformed into top graphite layer 202 (3D). All that is required is that top graphite layer 202 and supporting portion 18a come in contact at least partially, and also that it come in contact partially with CNT 15. Therefore, gap layer 203 may exist (3E) between top graphite layer 202 and supporting portion 18a, and/or between top graphite layer 202 and CNT 15. Gap layer 203 here may be a void, or it may be formed by a carbon material or amorphous carbon that is a component material. Also, reinforcement layer 204 formed from amorphous carbon or such may be formed furthermore on the upper side of top graphite layer 202 (3F).

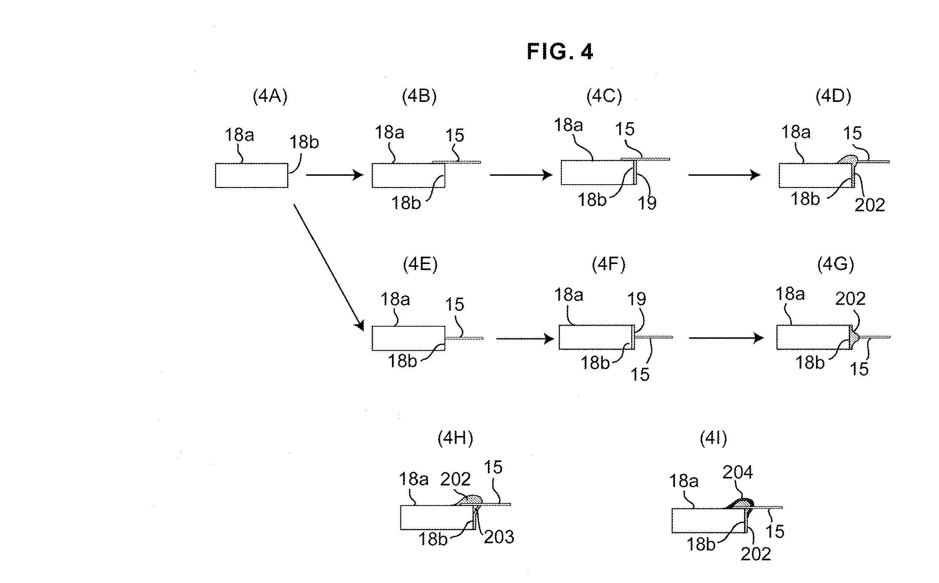

FIG. 4 is a schematic process drawing of a case in which only a top graphite layer is formed substantially vertically with respect to CNT. CNT 15 is arranged (4B) at the upper side of supporting portion 18a (4A), and carbon material layer 19 is formed at supporting portion tip end 18b and base end portion 15a of CNT 15, so that it becomes substantially perpendicular with respect to CNT 15 (4C). Next, when an electron beam is irradiated or an electric current is applied at base end portion 15a, the section of carbon material layer 19 present in periphery of base end portion 15a is transformed into top graphite layer 202 (4D). Also, instead of the step shown in (4B), even if CNT 15 is set up on supporting portion tip end 18b so that it becomes substantially vertical (4E), carbon material layer 19 is formed on supporting portion tip end 18b (4F), and the graphite formation is done in vicinity of base end portion 15a of CNT 15 (4G), top graphite layer 202 is formed substantially vertically with respect to CNT 15. All that is required is that top graphite layer 202 and supporting portion 18a come in contact at least partially, and also that it come in contact partially with CNT 15. Therefore, gap layer 203 may exist (4H) between top graphite layer 202 and supporting portion 18a, and/or between top graphite layer 202 and CNT 15. Gap layer 203 here may be a void, or it may be formed by a carbon material or amorphous carbon that is a component material. Also, reinforcement layer 204 formed from amorphous carbon or such may be formed furthermore on the upper side of top graphite layer 202 (4I).

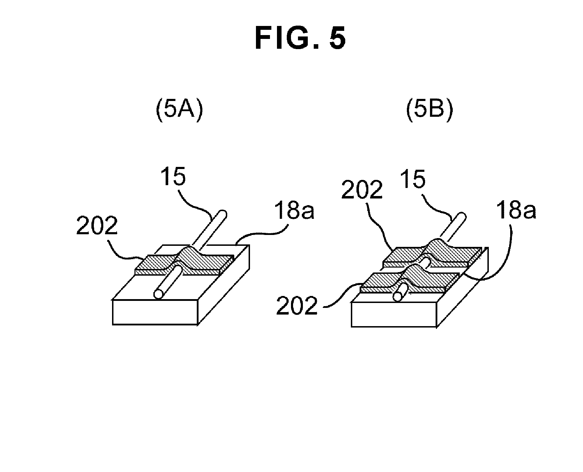

FIG. 5 is a schematic structural drawing of cases in which a graphite layer is formed partially on a supporting portion surface and a CNT surface. (5A) of said figure is a structural drawing in which top graphite layer 202 is formed only in one place, and (5B) of said figure is a structural drawing in which top graphite layer 202 is formed in two places. In the present invention, it goes without saying that the graphite layer may exist at three places or more, said graphite layer may co-exist with bottom graphite layer 201 and top graphite layer 202, and the graphite layer may be substantially horizontal, substantially perpendicular, or combination of these with respect to CNT.

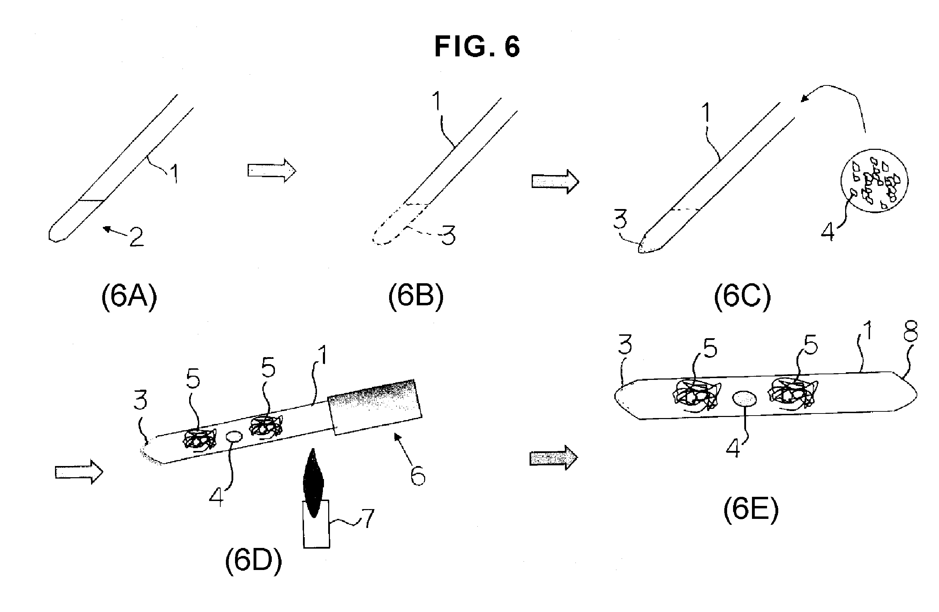

FIG. 6 shows the forming process of a carbon material layer. At first, the concentration of fullerene C₆₀ is adjusted. As shown in (6A) of said figure, fullerene solution 2 of a predetermined concentration is prepared by mixing the raw materials in which fullerene C₆₀ is monodispersed and the solvent (toluene) in quartz tube 1. Toluene is volatilized and removed by application of heat on quartz tube 1, and as shown in (6B), fullerene 3 of a predetermined mass remains behind in the inner wall of quartz tube 1. Silicon cantilever material 4 constructed in the shape of a minute chip is constructed beforehand, and is put into quartz tube 1 in which fullerene 3 has remained behind and been placed (see (6C)). Silicon cantilever material 4 comprises a silicon (Si) piece on which a Pt film has been deposited on one side. As shown in (6D), silicon cantilever material 4 is put in quartz tube 1 so that it is sandwiched between glass wool materials 5 for filters.

Next, an enclosure treatment of silicon cantilever material 4 is done (see (6D) and (6E)). The aperture side of quartz tube 1 is connected to aspiration port 6, and a vacuum is pulled. Furthermore, a vacuum enclosure is done by heating and melting the vicinity of aspiration port 6 of quartz tube 1 with burner 7. Fullerene 3 is sublimated by heating at 400°C quartz tube 1 whose aperture side has been vacuum-sealed (8). The sublimated fullerene 3 passes through glass wool materials 5, deposits on the surface of silicon cantilever material 4, and forms a carbon material layer. During this deposition process, impurities contained in fullerene 3 are removed through glass wool materials 5.

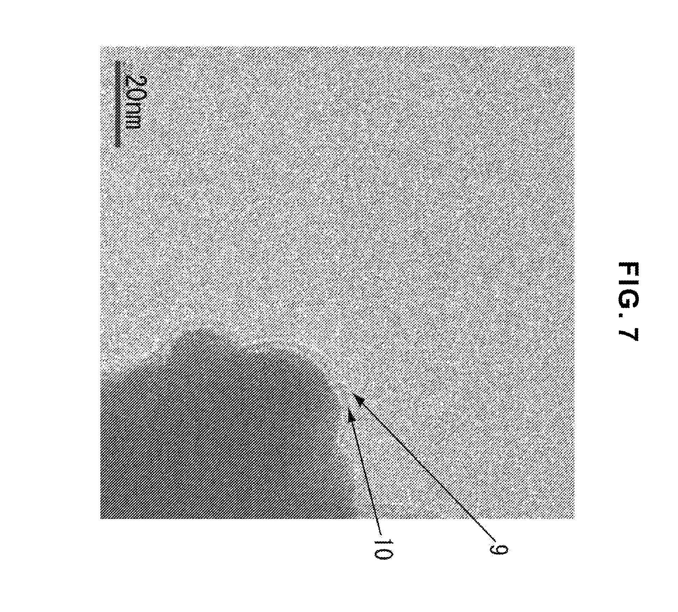

Through the above formation process, carbon material layer can be deposited and formed on the surface of silicon cantilever material 4. Below, verification experiments of the carbon material layer formation condition are explained. The verification experiments were done by changing the mixture concentration of fullerene C₆₀ with respect to toluene, as well as the sublimation time (with heat application of 400°C).
First, deposition of the fullerene molecular layer (carbon material layer) obtained by the above formation process was confirmed. FIG. 7 shows a TEM photograph of an experimental example in which a sublimation treatment was done for 30 minutes with heating at 400°C, using a fullerene solution with mixture concentration of 0.15mM fullerene C₆₀ in 500µL of toluene. In this case, it can be understood that fullerene molecular layer 9 comprises about 3 layers of deposited matter 10.

Furthermore, a verification of the carbon material layer formation condition was done on an object on which carbon material layer is formed, by forming a carbon material layer of the above fullerene on a knife edge for use in a CNT cartridge.

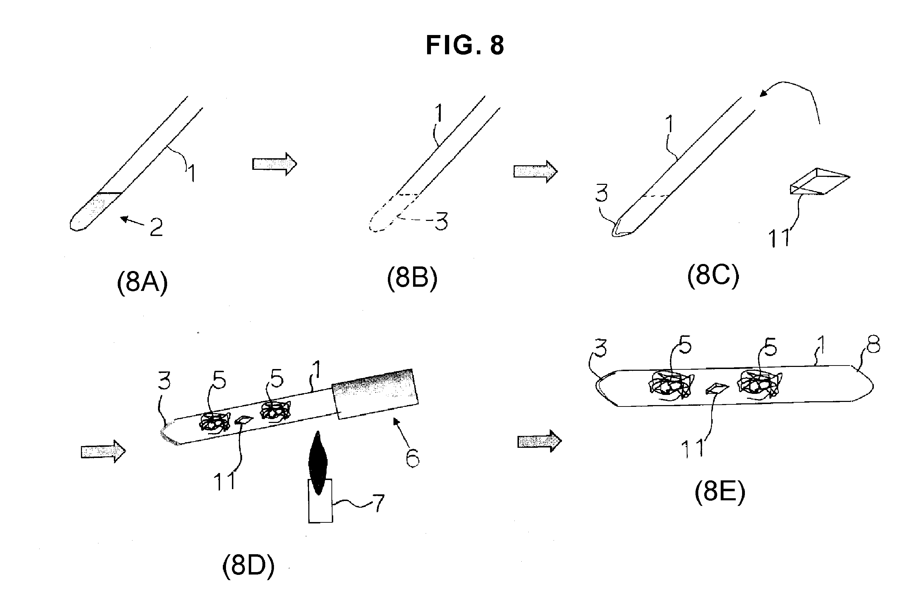

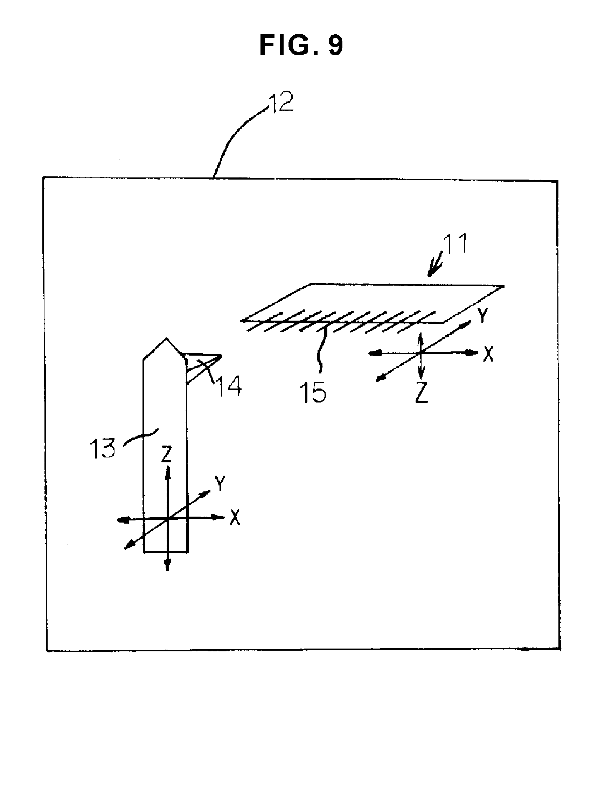

FIG. 8 shows forming process of a carbon material layer on knife edge 11. Here, an explanation is made on knife edge 11. A CNT cartridge in which multiple CNTs 15 have been placed on the edge portion of knife edge 11 is used for CNT transfer treatment, where the base end portion of one of the CNTs is transferred to protruded portion 14 of cantilever 13. The CNT transfer step to the cantilever is explained in summary. FIG. 9 shows the CNT transfer step. Cantilever 13 is a silicon-made member comprising a cantilever portion and protruded portion 14 formed at its extremity. The CNT cartridge is placed so that CNT 15 faces this protruded portion 14. In cantilever 13, a three-dimensional movement in XYZ directions can be adjusted by a three-dimensional movement mechanism (not shown). Also, in a similar manner, the CNT cartridge is also set up so that a three-dimensional movement in XYZ directions is possible. By these movement adjustments, CNT 15 is transferred so that a CNT tip region (base end portion) adheres to protruded portion 14. These transfer operations are done with magnified projection from electron microscope room 12. By the way, knife edge 11 may be anything, as long as it has a sharp knife point, and its base material has a structure in which CNTs can be adhered on the main body surface. For example, one may use a razor blade, a retractable knife blade, or a silicon piece with a side polished to sharpness, among others.

The formation process of a carbon material layer on knife edge 11 is explained. First, after a concentration adjustment of fullerene C₆₀ is done, in the same manner as the steps in (6A) and (6B) of FIG. 6, a fullerene solution of a predetermined concentration is prepared by mixing the raw material in which fullerene C₆₀ is monodispersed with the solvent (toluene) in quartz tube 1 (see (8A)), and then toluene is removed by application of heat, so that fullerene 3 of a predetermined mass remains behind in the quartz tube 1 inner wall, as shown in (8B). Furthermore, knife edge 11 with a minute configuration is put beforehand into quartz tube 1 in which fullerene 3 remains and is positioned (see (8C)). An enclosure treatment of knife edge 11 is done in the same manner as the step of (6D) and (6E) (see (8D) and (8E)). Afterwards, quartz tube 1 that has been vacuum-sealed (8) is heated at 400°C, fullerene 3 is sublimated and deposited on the surface of knife edge 11, and a carbon material layer is formed.

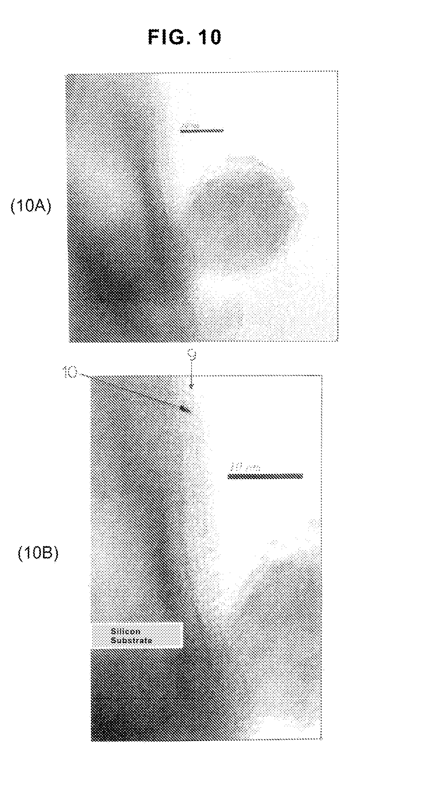

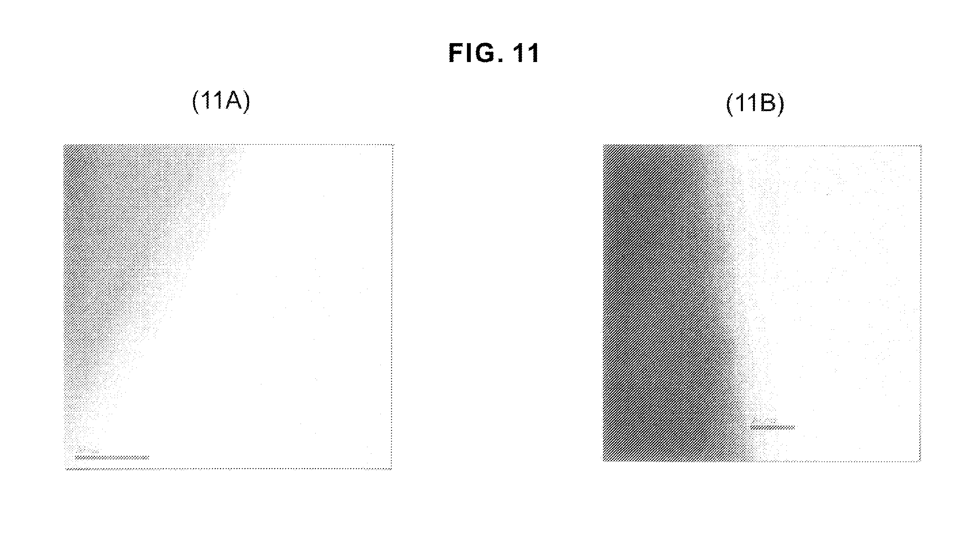

The deposition state of the fullerene molecule layer (carbon material layer) obtained by the above formation process on the surface of knife edge 11 comprising a silicon piece was confirmed. In (10A) and (10B) of FIG. 10, TEM photographs are shown as an experimental result of using a fullerene solution with a mixture concentration of 1.0mM fullerene C₆₀ with respect to 500µL of toluene, to do a sublimation treatment by heating at 400°C for 2 hours. From the photographs of FIG. 10, formation of a fullerene molecule layer of about 3nm thickness was confirmed. From the enlarged photograph of the fullerene molecule layer of (10A), shown in (10B) of FIG. 10, it can be understood that fullerene molecule layer 9 comprises about 4 layers of deposited matter 10. Also, FIG. 11 shows experimental examples in which the mixture concentration and the sublimation time were varied. (11A) of said figure shows an experimental result in which sublimation treatment was done for 2 hours with 400°C heating using a fullerene solution with a mixture concentration of 3.0mM fullerene C₆₀ with respect to 60µl of toluene, which is greater than the example of FIG. 10. (11B) of said figure shows an experimental result in which a sublimation treatment was done for 1 hour with heating at 400°C, using a fullerene solution with a mixture concentration of 3.0mM fullerene C₆₀ with respect to 50µL of toluene. In the cases of (11A) and (11B), the respective fullerene molecular layer thickness was 13nm, 8.5nm. From these experiments, it became clear that the thickness of fullerene molecule layer could be controlled by adjustments of the mixture concentration of the fullerene solution and the sublimation time.

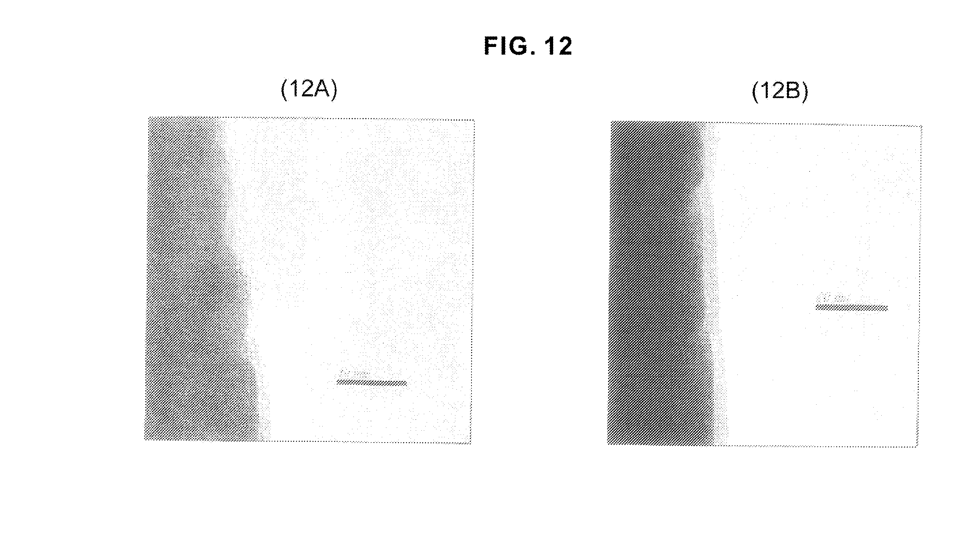

Based on the above experimental results, production of fullerene molecule layers that were as thin as possible was attempted, varying the carbon material layer formation condition in various ways. FIG. 12 shows a successful example in the layer thickness reduction. (12A) of said figure shows an experimental result in which a sublimation treatment was done with 400°C heating for 30 minutes, using a fullerene solution with a mixture concentration of 3.0mM fullerene C₆₀ with respect to 50µL of toluene. (12B) of said figure shows an experimental result in which a sublimation treatment was done with 400°C heating for 1 hour, using a fullerene solution with a mixture concentration of 1.0mM fullerene C₆₀ with respect to 30µL of toluene. The case of (12A) is a relatively short heat-treatment using a fullerene solution of a relatively high mixture concentration. In this case, the fullerene molecule layer thickness is 2.1nm, and it was confirmed that the layer thickness reduction was successful. The case of (12B) is a heat-treatment using a fullerene solution with a thinner mixture concentration than that of (12A). Also in this case, the fullerene molecule layer thickness is 4.5nm, and a layer thickness reduction was possible.

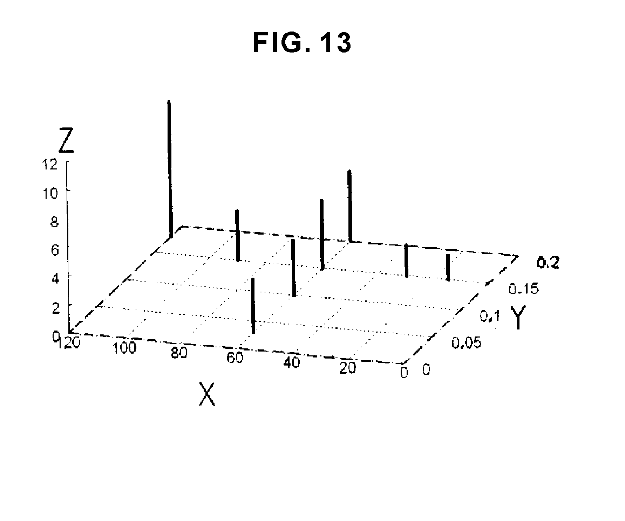

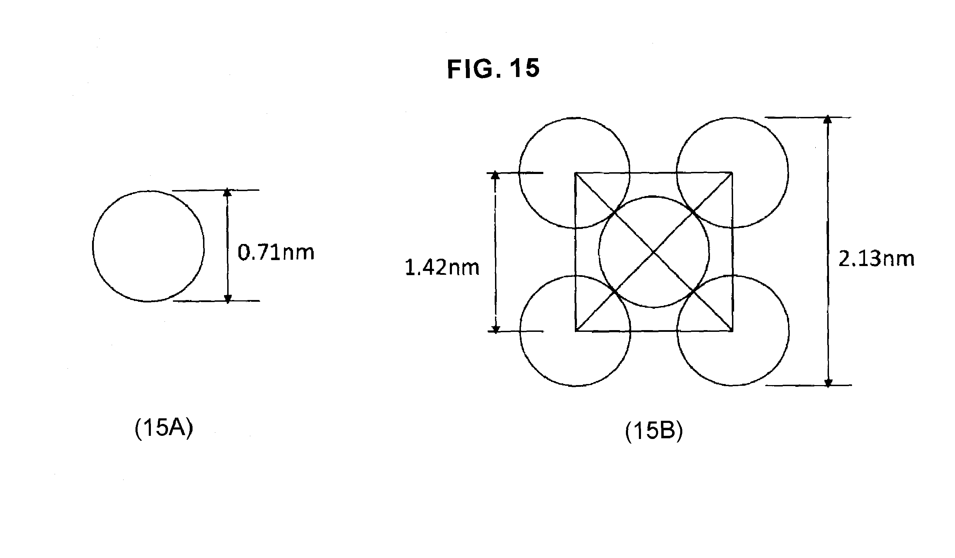

FIG. 13 shows a graph in which the variation of molecule film thickness Z (nm) with respect to enclosed quantity Y (µM) of fullerene C₆₀ molecules and sublimation time X (minute), obtained by basing on various experiments done by the present inventors, is summarized. It was understood that the molecule film thickness is more sensitive to the sublimation time than the fullerene enclosed quantity. Also, in the experimental examples where the film thickness was most reduced, the average film thickness was 1.7nm at the sublimation time of 15 minutes. FIG. 15 is a schematic diagram of fullerene molecules (15A) and their face centered cubic lattice (fcc) structure (15B), described in a reference (Chemistry and Physics of Fullerene, by Hisanori Shinohara and Yahachi Saito, Nagoya University Publication Society, January, 1997). From these fullerene molecular structure data, it is understood that the thinnest molecular film above corresponds to thickness of only 2-3 fullerene molecules.

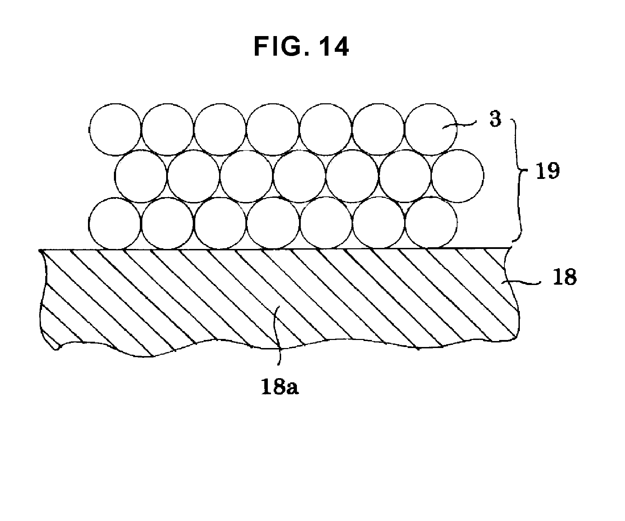

FIG. 14 is a schematic diagram of supporting body 18 on which carbon material layer 19, in which fullerenes 3 are layered, is formed on supporting portion 18a. Said supporting body 18 is a main body, such as a silicon substrate, a knife edge, a cantilever and others, that fastens a CNT. Carbon material layer 19 of layered fullerenes 3 is formed on supporting portion 18a of this supporting body 18, which is supposed to support a CNT. Needless to say, fullerenes 3 may be substituted with other carbon materials.

Next, a CNT fastening treatment using a carbon material layer concerning the present invention is explained. The fastening treatment is done by placing a CNT on the fullerene molecule layer shown in FIG. 12 and others, converging an electron beam in a spot on a fullerene molecular film on a silicon substrate inside a TEM adjusted to an accelerating voltage of 90kV, and thus irradiating. The current density of the convergence electron beam is about 10^{- 13}A/nm². This is a 50 to 300-fold value compared to the usual observation.

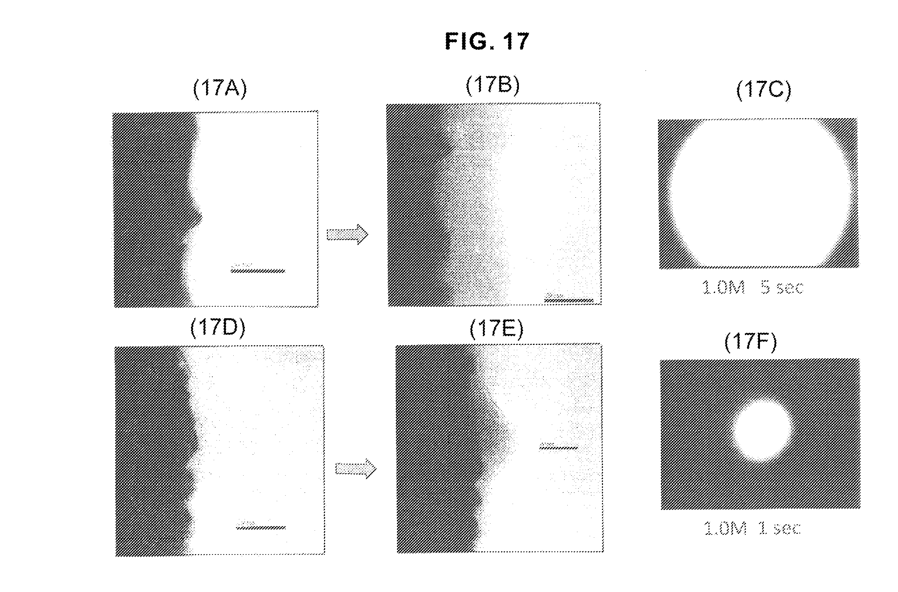

FIG. 17 shows TEM photographs before and after an electron beam irradiation, from two irradiation examples. (17A), (17B), and (17C) of said figure show a TEM photograph before electron beam irradiation and one after irradiation, each from one irradiation example, and the beam area (1.0M, 5 seconds). (17D), (17E), and (17F) of said figure show a TEM photograph before an electron beam irradiation and another after irradiation from a different irradiation example, and the beam area (1.0M, 1 second). These irradiation experiments were done using fullerene molecule layers obtained by the carbon material layer formation condition using the fullerene solution of (11B) of said FIG. 11. The dark region at the left side in (17A), (17B), (17D), and (17E) of said figure is the substrate. From these TEM photographs, it is understood that the fullerene molecule layer on the substrate is transformed into an amorphous carbon layer.

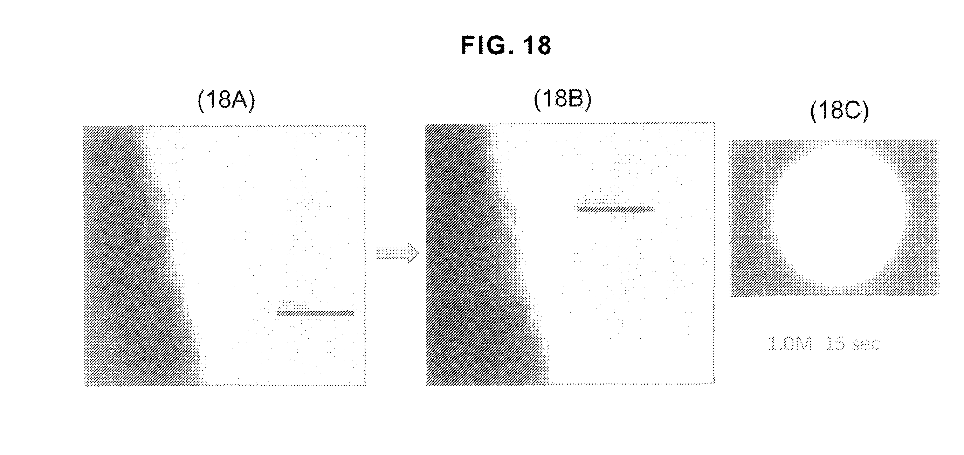

To compare with the above experimental results, an irradiation experiment was done, using a fullerene molecule layer obtained by a different carbon material layer formation condition. FIG. 18 shows an irradiation experiment example done using a thinner fullerene molecule layer obtained by the carbon material layer formation condition using the fullerene solution of (12A) of said FIG. 12. (18A), (18B), and (18C) of said figure shows TEM photographs before and after the irradiation, and the beam area (1.0M, 15 seconds) in said irradiation example. From the photograph in (18B) of FIG. 18, it is understood that the amorphous carbonization of the fullerene molecule layer is done moderately in comparison with the experimental results of FIG. 17.

From the experiments in which the structural change process was observed with varying irradiation condition of the electron beam, a morphology transformation in three general stages (movement of fullerene molecules, structure destruction, structure reconstruction) was observed when electron beam irradiation was done on the fullerene molecule film. When an electron beam with a current density of 5 × 10⁻¹³A/nm² was irradiated in a region of a diameter of 15nm on the fullerene molecule layer, an increase of film thickness was confirmed at the edge of the irradiation area after being irradiated for about 60 seconds (quantity of implantation (dose quantity): 2 × 10⁸ electrons/nm²). In other words, it can be understood that the fullerene C₆₀ molecules outside the radiation range had aggregated to the area where the energy was high. At that time, at the center portion of the irradiation area, the spherical shell-like structure of the C₆₀ molecules began to break, and an amorphous condition was assumed. 120 seconds after the start, a carbon structure reconstruction occurred at the center of the irradiation area. At the part where amorphous carbon had deposited, a layer structure was observed. Although the crystallinity was imperfect, the correspondence to the graphite structure was confirmed from the spacing. From this result, it is thought that the deposited matter after irradiating an electron beam for 120 seconds (dose quantity: 4 × 10⁸ electrons/nm²) is electrically conductive. In this state, it becomes possible for a CNT to be fastened.

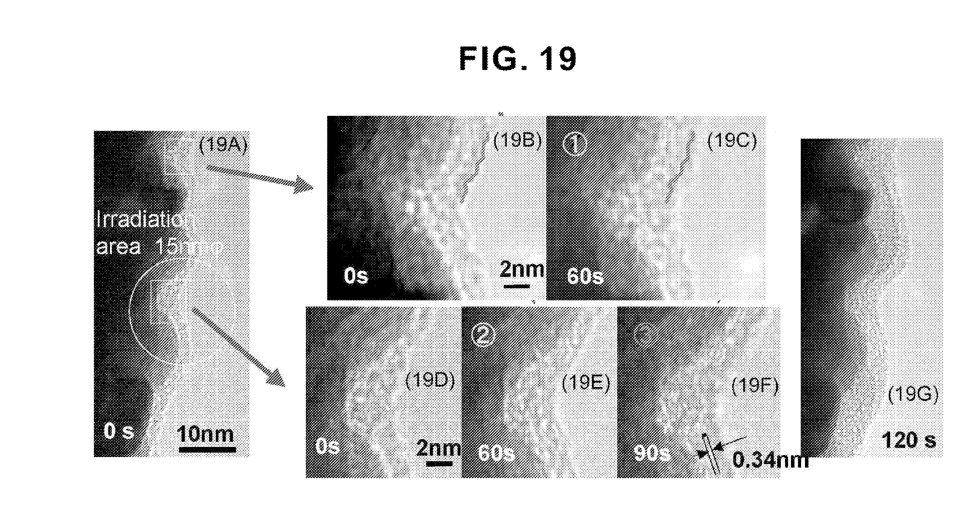

FIG. 19 is TEM photographs showing a process where a fullerene molecule film is transformed into a graphite film by electron beam irradiation. The diameter of the electron beam is 15nm. (19A) of said figure is the fullerene molecule film before irradiation, and (19G) is after 120 seconds of irradiation with the electron beam. Here, a process in three stages is occurring, namely an aggregation of the fullerenes to the center, a formation of amorphous carbon, and a formation of graphite.

(19B) and (19C) of FIG. 19 are enlarged TEM photographs of the position approximately 10nm away from the irradiation area. (19B) is the photograph before irradiation, and (19C) is the photograph after an irradiation for 60 seconds. When the pre- and the post-irradiation data are compared, it can be understood that that the molecule film increased in thickness by about 1 molecule layer after 60 seconds of irradiation. This indicates that fullerene molecules move slowly from outside the irradiation area as the irradiated area undergoes the structural change.

(19D), (19E), and (19F) of FIG. 19 are enlarged TEM photographs of the irradiated area. (19D) is the photograph before the irradiation, (19E) after 60 seconds of irradiation, and (19F) after 90 seconds of irradiation. It can be confirmed that the structure of the particulate matter has collapsed after 60 seconds of irradiation, indicating that amorphous carbon had formed. It can be confirmed that a layer structure is formed anew after 90 seconds of irradiation. As a result of measuring the spacing of this structure, it was found that the spacing distance was 0.34nm, and it was confirmed that the layer structure was that of graphite. Graphite has a high electric conductivity and an affinity with CNTs in comparison with amorphous carbon, and it is optimum for forming a bonding portion between a CNT and a supporting portion.

As discussed above, upon using a molecule layer of fullerenes C₆₀ in a carbon material layer, it undergoes an electron beam-induced reaction through irradiation of an electron beam, and the spherical shell-like structure of the C₆₀ molecules disintegrates and is transformed into a layered amorphous structure. It causes a reconstruction of the carbon structure at the center of the electron beam irradiation area, the carbon atoms in the irradiation area bond covalently, and thus a CNT fastening becomes possible. Furthermore, because the transformation into a graphite (black lead) structure upon an irradiation of an electron beam became clear, fullerene allows a deposited matter of said fastening portion to have an electrical conductivity, and therefore it is suitable for a CNT supporting body. Also, the irradiation area can be formed selectively into an amorphous or graphite structure by an adjustment of the electron beam irradiance. In particular, by the formation of a graphite layer, a modification can be made into an area where an electrical contact becomes possible, and a wide development in applications in nanodevices and such becomes possible.

In the following, steps for CNT fastening to a protruded portion of a cantilever using the CNT fastening method of the present embodiment is explained.

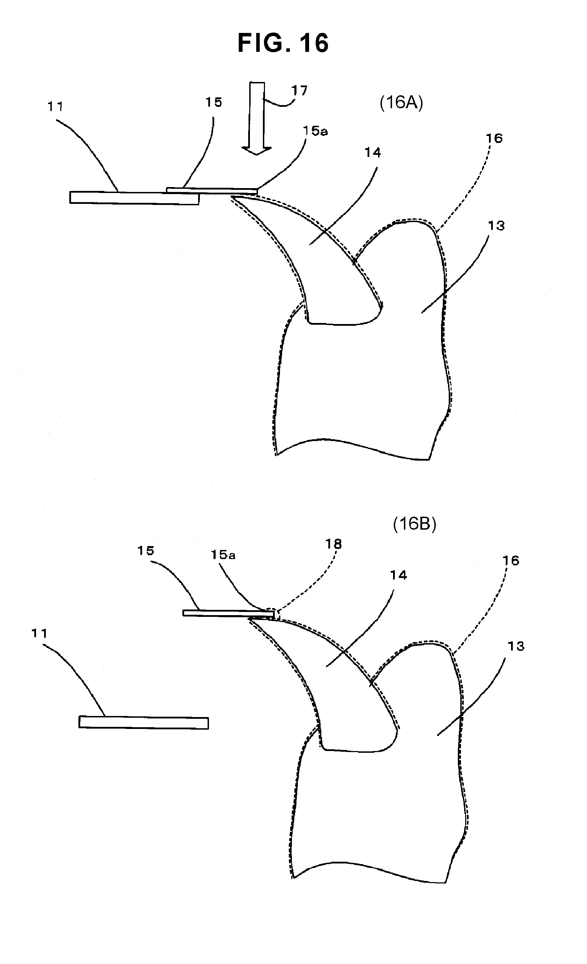

FIG. 16 shows the CNT fastening step to a protruded portion of a cantilever. (16A) of FIG. 16 shows immediately after CNT 15 is transferred onto protruded portion 14 of the cantilever. On the surfaces of cantilever portion 13 and protruded portion 14 of the cantilever, fullerene molecule layer 16 is formed as a film by the above carbon material layer formation steps. Next, in the adhesion state where base end portion 15a of CNT 15 is transferred from knife edge 11 to cantilever protruded portion 14 and the CNT tip end portion is extended from protruded portion 14 of the cantilever, electron beam 17 or an ion beam is irradiated at base end portion 15a of CNT 15. This beam irradiation is done under high vacuum inside a TEM. By the CNT fastening mechanism based on the electron beam induced reaction described above, while doing a high resolution observation inside a transmission electron microscope (TEM) where observation is done under high vacuum (approximately 10⁻⁵ Pa), a strong CNT fastening treatment can be done by decomposing said carbon material layer under the high vacuum where extremely few hydrocarbon remains in the environment.

As shown in (16B) of FIG. 16, knife edge 11 is moved steadily downward after base end portion 15a of CNT 15 is fastened to the tip end of protruded portion 14 of the cantilever. The CNT tip end portion that had been adhered to the knife point separates by this movement, and a basic form of a CNT probe in which the CNT tip end portion extends from protruded portion 14 of a cantilever is completed. By the above CNT fastening treatment, a CNT cartridge in which the end portion of the CNT is fastened more strongly at the edge portion of knife edge 11 can be produced. In particular, by the CNT fastening treatment under a high resolution observation that could not be realized using a method shown in said Patent Document 2 for fusing the base end portion of a CNT on the surface of a protruded portion by electron beam irradiation or electric current electrification inside a SEM, production of a CNT supporting body using a small-diameter CNT of or less than 5nm, such as a monolayer or two layers, becomes possible.

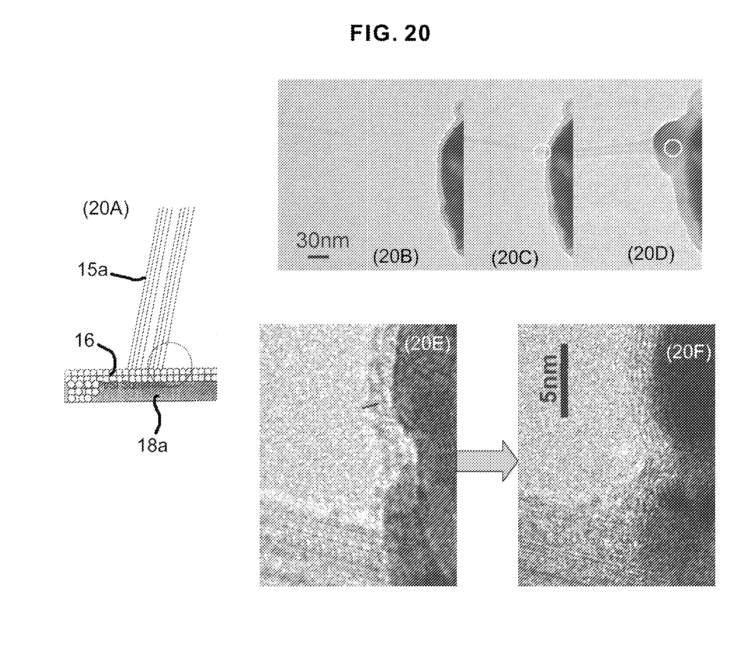

FIG. 20 is TEM photographs showing an experimental example of fastening, in which a CNT is supported on a silicon knife edge with a Pt coating on which a fullerene molecule layer (two or three levels), shown in FIG. 7 and others, has been formed, and irradiated with an electron beam. The CNT used here is a multilayered CNT synthesized by arc discharge. (20A) of FIG. 20 schematically shows a fullerene molecule layer deposited on a silicon substrate and a beam irradiation region of a CNT. (20B), (20C), and (20D) of said figure respectively shows a TEM photograph of a vicinity of said region before the CNT placement, a TEM photograph of a vicinity of said region after the CNT placement and before the electron beam irradiation, and a TEM photograph following an irradiation for 120 seconds with an electron beam of 20nm diameter and 3.5 × 10⁸ electrons/nm² dose quantity. When the spots in (20C) and (20D) indicated by white circles are compared, the spherical shell-like structure of the molecule film becomes invisible by irradiating the electron beam in the vicinity of the CNT root, and a layered structure is observed. Also, an amorphous carbon depositing was observed on top of the layer structure so as to cover the CNT root part.

(20E) and (20F) of said figure are enlarged photographs, and they are, respectively, a TEM photograph of the vicinity of the irradiation area after the CNT placement and before the electron beam irradiation, and a TEM photograph of the vicinity of said area following the electron beam irradiation for 120 seconds. The fullerene before the irradiation was observed to have transformed into a material having a layer structure after the irradiation. The spacing in this layer structure coincides with the spacing in graphite. As thus described, a CNT can be fastened firmly without impairing electroconductivity, by depositing amorphous carbon on top of the graphite layer so as to cover the CNT root part.

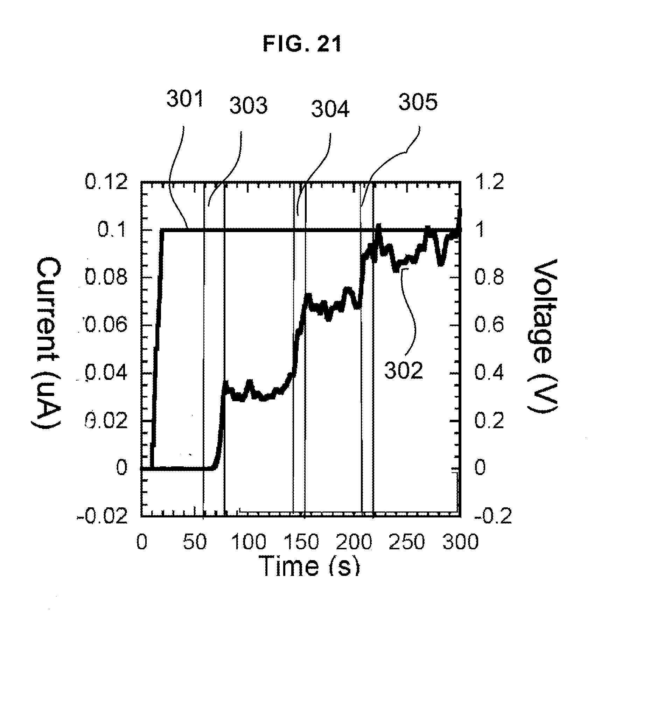

FIG. 21 is a graph showing an increase in conductivity by the graphite layer formation. In the state where a probe tip end is in contact with a nanotube, 1V electrical voltage shown in electrical voltage graph 301 was applied. Electric current graph 302 indicates that the electric current is 0 before the electron beam irradiation. In this state, during time periods 303, 304 and 305 shown by a solid line, an electronic irradiation for 15 seconds, 10 seconds, and 10 seconds respectively was done. In the first irradiation, the electric current value suddenly increased after a time lag of 10 seconds. The time lag here is thought to be the necessary time for attaining sufficient activation energy for the structural change of the fullerene to occur by the electron beam irradiation. By this irradiation, the formation of the layer structure began, and the electroconductivity improved. From the fact that the electric current value remained constant when the dose quantity of said electron beam was changed back to the value at the time of normal observation, it was found that the structural change that varies the electroconductivity did not occur by this dose quantity. Also in the second and the third irradiation, it is thought that electric current value increased by the progression of the conversion from fullerene into graphite.

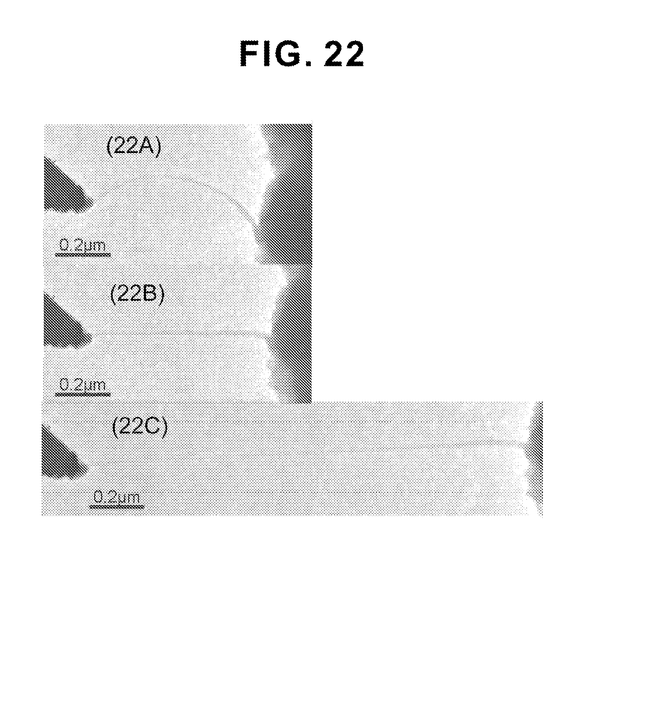

FIG. 22 is TEM photographs showing a mechanical strength evaluation of a CNT supporting body on which a graphite layer was formed. The force exerted on the fastening portion was measured from the bending of the cantilever that occurs by fastening the CNT and then pulling. (22A) of said figure is a TEM photograph before the measurement, (22B) is a photograph during the measurement, and (22C) is a TEM photograph after a force of 100nN was exerted. In (22C), the strength of the fastening portion itself cannot be measured because a slipping occurs between a nanotube and a nanotube or a nanotube and the substrate, but it may be said that as a minimum, it possesses a strength enough to withstand a force of 100nN. This force, when is converted into pascal, is about 100 GPa, which is a very strong fastening that corresponds to the tensile strength of a nanotube.

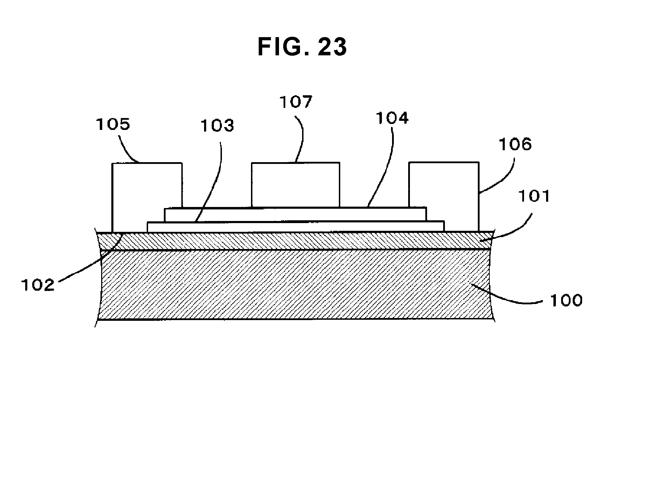

The CNT supporting body production method concerning the present embodiment can be applied to production of not only CNT probes, but also nanodevices such as quantum effect transistors. FIG. 23 shows a summary configuration of a quantum effect transistor comprising a CNT circuit element fastened by means of said manufacturing method. In said figure, oxide film 101 is formed on the surface of silicon substrate 100. CNT 104 is placed after having formed beforehand carbon material layer 103 of fullerene or such to surface 102 of oxide film 101. After this, by decomposing said carbon material layer while making a high-resolution observation in a TEM, CNT 104 can be fastened and positioned on a substrate. Next, by layering and forming source electrode layer 105 and drain electrode layer 106 at both end sides of the CNT, and furthermore, by layering gate electrode layer 107 at the center of CNT 104, a quantum effect transistor comprising a CNT circuit element is completed.

The present invention is not limited to the embodiments described above. Various modifications, design alterations, and others that do not involve a departure from the technical concept of the present invention are also included in the technical scope of the present invention.

### INDUSTRIAL APPLICABILITY

According to the present invention, a highly precise CNT probe, a CNT nanodevice such as a quantum effect transistor, and a CNT holding body for use in device production can be provided, in which a minute CNT has been packaged and incorporated. Because of this, highly efficient electric and electronic devices utilizing the minuteness and high electroconductivity of CNTs can be provided. Therefore, a wide usage and high functionalization of these apparatuses can be expected.

## Claims

1. A carbon nanotube (subsequently referred to as "CNT") supporting body in which a CNT is fastened to a supporting portion of said CNT supporting body,
said CNT supporting body, **characterized in that**
a bottom graphite layer is formed on a surface of said supporting portion,
a fastening portion of said CNT is arranged to contact a surface of said bottom graphite layer,
and
furthermore, said CNT is fastened to said supporting portion by a top graphite layer coating said fastening portion.

2. A CNT supporting body in which a CNT is fastened to a supporting portion of said CNT supporting body,
said CNT supporting body, **characterized in that**
a fastening portion of said CNT is arranged on a surface of said supporting portion,
a top graphite layer is formed on said surface of said supporting portion of and near said fastening portion,
and
said CNT is fastened to said supporting portion by said top graphite layer coating said fastening portion.

3. The CNT supporting body according to claim 1 or 2, wherein at least an amorphous carbon layer is formed at an outside surface of said top graphite layer.

4. The CNT supporting body according to any one of claims 1 to 3, wherein
said supporting body is a cantilever,
said supporting portion is a protruded portion formed to be protruded from said cantilever,
said fastening portion is a base end portion of said CNT,
and
said CNT supporting body is a CNT probe in which said base end portion of said CNT is fastened to said protruded portion, and a tip end portion of said CNT is protruded from said protruded portion.

5. The CNT supporting body according to any one of claims 1 to 3, wherein
said supporting body is a circuit board,
said CNT is a circuit element,
said supporting portion is a joining portion where said CNT is joined,
said fastening portion is an end portion of said CNT,
and
said CNT supporting body is a CNT circuit board in which said end portion of said CNT is fastened to said joining portion.

6. The CNT supporting body according to any one of claims 1 to 3, wherein
said supporting body is a knife edge,
said supporting portion is an edge portion from which said CNT is protruded,
said fastening portion is an end portion of said CNT,
and
said CNT supporting body is a CNT cartridge in which said end portion of said CNT is fastened to said edge portion.

7. The CNT supporting body according to any one of claims 1 to 6, wherein a site in which said CNT is fastened to said supporting portion by said top graphite layer and/or said bottom graphite layer is one place or more.

8. A production method of a CNT supporting body in which a CNT is fastened to a supporting portion of said supporting body,
said production method of a CNT supporting body **characterized in that**
a carbon material layer is formed on a surface of said supporting portion, a carbon material comprising a carbon molecule or an organic matter being deposited in said carbon material layer,
a fastening portion of said CNT is brought into contact with a surface of said carbon material layer for positioning said fastening portion on said surface,
an electron beam or an ion beam is irradiated on said fastening portion and/or a region subject to irradiation at a vicinity of said fastening portion to decompose said carbon material layer,
and
said fastening portion is coated by a carbon film formed by said decomposition so that said CNT is fastened to said supporting portion.

9. A production method of a CNT supporting body in which a CNT is fastened to a supporting portion of said supporting body,
said production method of a CNT supporting body **characterized in that** a fastening portion of said CNT is positioned on a surface of said supporting portion, a carbon material layer is formed by depositing a carbon material comprising a carbon molecule or an organic matter on said surface of said supporting portion on or near said fastening portion,
said carbon material layer is decomposed by irradiating an electron beam or an ion beam on said fastening portion and/or a region subject to irradiation at a vicinity of said fastening portion,
and
said CNT is fastened to said supporting portion by coating said fastening portion with a carbon film formed by said decomposition.

10. The production method of a CNT supporting body according to claim 8 or 9, wherein said carbon material layer is formed by
positioning said carbon material of a predetermined mass in a container,
putting said supporting body in said container then sealing said container, vaporizing said carbon material by heating said container,
and
depositing said carbon material on a surface of said supporting body including said supporting portion.

11. The production method of a CNT supporting body according to claim 10, wherein
a carbon material solution of a predetermined concentration is prepared in which said carbon material is mixed in a solvent,
a predetermined volume of said carbon material solution is poured into said container, said solvent is removed from said container by an application of heat,
and
said carbon material of a predetermined mass is caused to remain and be arranged in said container.

12. The production method of a CNT supporting body according to claim 10 or 11, wherein said carbon material adhered on said surface of said CNT supporting body is removed by washing said CNT supporting body with a washing solvent or heating said supporting body, after said fastening portion of said CNT has been fastened to said supporting portion by coating with said carbon film.

13. The production method of a CNT supporting body according to any one of claims 8 to 11, wherein said carbon film is an amorphous carbon film or a graphite film.

14. The production method of a CNT supporting body according to any one of claims 8 to 13, wherein said carbon molecule is a fullerene or a metal-including fullerene.

15. The production method of a CNT supporting body according to any one of claims 8 to 13, wherein said organic matter includes a component aside from carbon, and said carbon film is formed by said decomposition during which said component aside from carbon is vaporized and dispersed.

16. The production method of a CNT supporting body according to any one of claims 8 to 15, wherein
said supporting body is cantilever,
said supporting portion is a protruded portion formed to be protruded from said cantilever,
said fastening portion is a base end portion of said CNT,
and
said CNT supporting body is a CNT probe in which said base end portion of said CNT is fastened to said protruded portion so that a tip end portion of said CNT projects from said protruded portion.

17. The production method of a CNT supporting body according to any one of claims 8 to 15, wherein
said supporting body is a circuit board,
said CNT is a circuit element,
said supporting portion is a joining portion to which said CNT is joined,
said fastening portion is an end portion of said CNT,
and
said CNT supporting body is a CNT circuit board in which said end portion of said CNT is fastened to said joining portion.

18. The production method of a CNT supporting body according to any one of claims 8 to 15, wherein
said supporting body is a knife edge,
said supporting portion is an edge portion from which said CNT protrudes,
said fastening portion is an end portion of said CNT,
and
said CNT supporting body is a CNT cartridge in which said end portion of said CNT is fastened to said edge portion.
